# EUROPÄISCHE PATENTSCHRIFT

(11) **EP 1 439 942 B1**
(45) Veröffentlichungstag und Bekanntmachung des Hinweises auf die Patenterteilung: **21.05.2008**
(21) Anmeldenummer: 02801910.7
(22) Anmeldetag: 23.10.2002
(51) Int. Cl.: B29C 47/02, B29C 47/04, B29C 63/10

(54) **VERFAHREN UND VORRICHTUNG ZUM HERSTELLEN EINER VERSTÄRKTEN MUFFE AN EINEM EXTRUDIERTEN KUNSTSTOFFROHR AUS THERMOPLASTISCHEM KUNSTSTOFF**
METHOD AND DEVICE FOR PRODUCING A REINFORCED SOCKET ON AN EXTRUDED PLASTIC TUBE MADE OF THERMOPLASTIC MATERIAL
PROCEDE ET DISPOSITIF POUR LA PRODUCTION D'UN MANCHON RENFORCE SUR UN TUBE EXTRUDE EN MATIERE THERMOPLASTIQUE

(30) Priorität: 25.10.2001 DE 10152604
(43) Veröffentlichungstag der Anmeldung: 28.07.2004
(73) Patentinhaber: Drossbach GmbH & Co. KG, 86641 Rain am Lech (DE)
(72) Erfinder: DIETRICH, Karl, 86641 Rain am Lech (DE); HÜBNER, Peter, 86156 Augsburg (DE)
(74) Vertreter: Altenburg, Udo
(86) Internationale Anmeldenummer: PCT/EP2002/011848
(87) Internationale Veröffentlichungsnummer: WO 2003/035364

(56) Entgegenhaltungen:
- CH-A- 479 391
- FR-A- 2 112 918
- FR-A- 2 551 837
- US-B1- 6 199 592
- PATENT ABSTRACTS OF JAPAN vol. 007, no. 223 (M-247), 4. Oktober 1983 (1983-10-04) & JP 58 118232 A (NITTO DENKI KOGYO KK), 14. Juli 1983 (1983-07-14)
- PATENT ABSTRACTS OF JAPAN vol. 012, no. 212 (M-710), 17. Juni 1988 (1988-06-17) & JP 63 015735 A (SHIRO KANAO), 22. Januar 1988 (1988-01-22)
- PATENT ABSTRACTS OF JAPAN vol. 011, no. 393 (M-654), 23. Dezember 1987 (1987-12-23) & JP 62 160229 A (SHIRO KANAO), 16. Juli 1987 (1987-07-16)
- PATENT ABSTRACTS OF JAPAN vol. 010, no. 342 (M-536), 19. November 1986 (1986-11-19) & JP 61 144336 A (TOYOTSUKUSU:KK), 2. Juli 1986 (1986-07-02)

## Beschreibung

Die Erfindung betrifft ein Verfahren sowie eine Vorrichtung zum Herstellen einer verstärkten Muffe an einem extrudierten Kunststoffrohr aus thermoplastischem Kunststoff, vorzugsweise an einem Wellrohr, bei dem das Rohr in vorbestimmten Abschnittlängen mit endseitigen Muffen versehen wird.

Kunststoffrohre in einwandiger und mehrwandiger Ausführungsform, beispielsweise doppelwandige Wellrohre mit einer gewellten äußeren Wandung und glatter innerer Wandung, werden aus thermoplastischem Kunststoff durch Extrudieren hergestellt. Das als kontinuierlicher Strang extrudierte und geformte Kunststoffrohr wird sodann in vorbestimmten Abschnittlängen von dem kontinuierlich hergestellten Rohr abgetrennt, so daß Rohrabschnitte gewünschter Länge entstehen. Diese Rohrabschnitte müssen mindestens an einem Ende mit einer im Durchmesser erweiterten Muffe, oder alternativ mit einer im Aussendurchmesser gleichen Muffe mit verkleinertem Spitzenende des Rohres, versehen werden, um die Rohrabschnitte bei ihrem Verlegen zusammenfügen zu können. Um derartige Muffen zu erzeugen, werden die Muffen in an sich bekannter Weise an dem kontinuierlich extrudierten Rohrstrang angeformt, wobei die Muffen dadurch freigelegt werden, daß der Rohrstrang im Bereich der angeformten Muffen zur Herstellung der Rohrabschnitte durchgetrennt wird. Bei üblichen Extrusionsverfahren ist es jedoch nur möglich, die Muffen mit einer Wandstärke herzustellen, die etwa im Bereich der Wandstärke des ein- oder mehrwandigen Rohrs liegt. Diese Wandstärken reichen aber häufig nicht aus, um Muffen der erforderlichen Festigkeit herzustellen. Eine gattungsbildende Vorrichtung wird in JP 62160229 offenbart.

Aufgabe der Erfindung ist es daher, ein Verfahren sowie eine Vorrichtung der eingangs angegebenen Art vorzuschlagen, womit sich von extrudierten Kunststoffrohren abgetrennte Rohrabschnitte mit verstärkten Muffen größerer Wanddicke herstellen lassen.

Erfindungsgemäß wird diese Aufgabe durch ein Verfahren gemäß Patentanspruch 1 sowie eine Vorrichtung gemäß Patentanspruch 14 gelöst.

Nach der Erfindung können verstärkte Muffen dadurch hergestellt werden, daß auf den Muffenbereich mindestens eine verstärkende Kunststoffschicht aufextrudiert wird, wobei der aufextrudierte thermoplastische Kunststoff der gleiche wie der des Kunststoffrohrs oder aber von einer Art ist, der sich gut mit dem Material des Kunststoffrohrs verbindet.

Zweckmäßigerweise wird das erfindungsgemäße Verfahren dadurch ausgeführt, daß jeder Rohrabschnitt um seine Längsachse drehbar gelagert und in Drehung versetzt wird und auf dem Muffenbereich durch einen Düsenkopf eines Extruders eine Kunststoffschicht aufextrudiert wird. Die zumindest eine Kunststoffschicht wird sozusagen auf den Muffenbereich aufgewickelt.

Dabei kann die Kunststoffschicht grundsätzlich durch eine Breitschlitzdüse, deren Extrusionsschlitz der Länge der Muffe entspricht, während einer oder mehrerer Umdrehungen des Rohrabschnitts aufextrudiert werden.

Vorzugsweise aber wird die die Muffe verstärkende Kunststoffschicht durch eine Profilspritzdüse in Form eines Strangs, dessen Breite oder Dicke einen Bruchteil der Muffenlänge beträgt, dadurch aufgebracht, daß der Düsenkopf und/oder der drehende Rohrabschnitt in Längsrichtung des Rohrabschnitts in der Weise bewegt wird, daß der Strang wendelförmig den Muffenbereich mit aneinanderliegenden Windungen einfaßt. Hierzu können Profilspritzdüsen mit verschiedenen Querschnitten verwendet werden. Als vorteilhaft haben sich Kreisquerschnitte oder Rechteckquerschnitte erwiesen. Es können auch Profilspritzdüsen mit rautenförmigen Querschnitten verwendet werden.

Die Kunststoffschicht bzw. die Windungen können in einer oder mehreren Lagen aufgebracht werden.

Um besonders feste Muffen herzustellen, kann in Weiterbildung der Erfindung unter und/oder in dem Verstärkungsprofil eine Bewehrung, beispielsweise Glasfasern, Polyamid-Draht oder Metall-Draht, mitgewickelt werden. Hierdurch kann eine Verstärkung der Ringspannung der Muffe erreicht werden.

Um eine gute Verbindung der aufextrudierten verstärkenden Schicht mit dem Muffenbereich des Rohrabschnitts zu gewährleisten, kann der Muffenbereich vor dem Aufextrudieren des Strangs oder des breiten Bands erwärmt werden. Die Erwärmung kann durch Aufblasen von Heißluft, vorzugsweise durch Infrarotstrahlung vor der Extrusionsdüse erfolgen. Vorzugsweise wird der Rohrabschnitt im Bereich der anzuformenden Muffe mit einem oder mehreren Quarzstrahlern bestrahlt, um den Rohrabschnitt im genannten Bereich anzuwärmen bzw. aufzuschmelzen.

Zweckmäßigerweise wird die aufextrudierte Schicht durch eine Profilwalze kalibriert und geglättet.

Zweckmäßigerweise wird mindestens in das mit der Muffe versehene Ende des Rohrabschnitts ein mit einem Drehantrieb versehener Stützdorn eingeführt. Der Stützdom ist zweckmäßigerweise mit einer Temperatursteuervorrichtung versehen, um die Temperatur des Stützdorns steuern zu können. Insbesondere kann der Stützdorn, der über Bohrungen mit einem Heiz- oder Kühlmedium über einen Drehverteiler durchströmt wird, mittels einem Temperiergerät beheizt oder gekühlt werden. Der Stützdorn wird also temperiert. Insbesondere kann er vor und während dem Aufextrudieren der die Muffe bildenden Kunststoffschicht angewärmt werden. Die Temperatur kann in Abhängigkeit verschiedener Randbedingungen gewählt werden. Ein typischer Temperaturbereich ist etwa 150°C. Nach dem Aufextrudieren wird der Stützdorn gekühlt, um die Wärme aus dem aufextrudierten Kunststoffmaterial und/oder dem darunter liegenden Rohrmaterial abzuführen.

Zusätzlich kann über den Drehverteiler Vakuum eingeleitet werden, um die aufgeheizte Muffe mit Verdickung am Stützdorn zu halten. Auf seiner Außenmantelfläche kann der Stützdom Vakuumschlitze besitzen. Um die Entformung zu erleichtern, kann der Stützdom insgesamt leicht konisch ausgebildet sein. Zusätzlich kann das Vakuumsystem mit Druck beaufschlagt werden, um das Entformen zu erleichtern.

Zweckmäßigerweise kann die aufextrudierte Muffe nicht nur von innen, d. h. durch den Stützdorn, gekühlt werden. Es kann eine Kühleinrichtung, insbesondere ein Kühlluftgebläse an der Mantelaußenseite des Rohres im Bereich der angeformten Muffe vorgesehen sein, um das aufextrudierte Material zu kühlen.

Weiterhin besteht ein Bedürfnis, Muffen und insbesondere verstärkte Muffen an Rohrabschnitte extrudierter Kunststoffrohre anzuformen, die ohne einen Muffenbereich extrudiert worden sind. Die Erfindung betrifft insofern auch ein Verfahren zum Herstellen einer verstärkten Muffe an einem extrudierten Kunststoffrohr aus thermoplastischem Kunststoff, vorzugsweise an einem Wellrohr, von dem Rohrabschnitte vorbestimmter Länge abgetrennt werden. Um an derartige Rohrabschnitte, die ohne Muffenbereiche extrudiert worden sind, Muffen anzuformen, wird jeder Rohrabschnitt mindestens an dem Ende, an dem eine Muffe anzuformen ist, auf einen rotierend antreibbaren Dorn, dessen äußere Kontur komplementär zum inneren Muffenbereich ist, aufgeschoben und anschließend wird an dem Dorn im Anschluß an den Rohrabschnitt die Muffe aufextrudiert. Dabei erfolgt die Extrusion in der Weise, daß sich die aufextrudierte Muffe mit dem Endabschnitt des erneut plastifizierten Rohrabschnitts verbindet.

Nach dieser Ausführungsform der Erfindung wird die Muffe in gleicher Weise auf den Dorn aufextrudiert wie es vorstehend bei den Extrusionsverfahren zur Herstellung von mindestens einer den Muffenbereich verstärkenden Schicht beschrieben worden ist.

Der Drehantrieb zur Erzeugung der Rotationsbewegung zwischen der Profilspritzdüse des Extruders und dem Rohrabschnitt bzw. dem Stützdorn kann verschieden ausgebildet sein. Es kann vorgesehen sein, daß unmittelbar der Stützdom und damit das darauf aufgeschobene Rohrstück angetrieben wird. Es kann auch vorgesehen sein, daß der Stützdorn frei drehbar gelagert ist und der Drehantrieb an anderer Stelle das Rohrstück und über dieses den Stützdorn rotatorisch antreibt.

Ausführungsbeispiele der Erfindung werden nachstehend anhand der Zeichnung näher erläutert. In dieser zeigt
- Fig. 1: eine Stirnseitenansicht einer Vorrichtung zur Herstellung oder Anformung einer verstärkten Muffe an einen Rohrabschnitt eines extrudierten Kunststoffrohrs in schematischer Darstellung,
- Fig. 2: eine Draufsicht auf die Vorrichtung nach Fig. 1,
- Fig. 3: einen Schnitt durch den Muffenbereich eines Doppelwandrohres, der durch eine aufextrudierte Kunststoffschicht verstärkt worden ist,
- Fig.4: einen Schnitt durch das Ende eines doppelwandigen Wellrohrs, an das eine verstärkte Muffe komplett im Wickelverfahren anextrudiert worden ist,
- Fig. 5: einen Schnitt durch das Ende eines dreiwandigen Wellrohrs, an dessen Außenmantel stirnseitig eine verstärkte Muffe komplett im Wickelverfahren anextrudiert worden ist,
- Fig. 6: einen Schnitt durch den Muffenbereich eines einwandigen Wellrohrs, der nach einer weiteren Ausführungsform der Erfindung durch eine aufextrudierte Kunststoffschicht verstärkt worden ist, und
- Fig. 7: einen Schnitt durch das Ende eines einwandigen Wellrohrs, an das stirnseitig eine verstärkte Muffe komplett im Wickelverfahren anextrudiert worden ist.

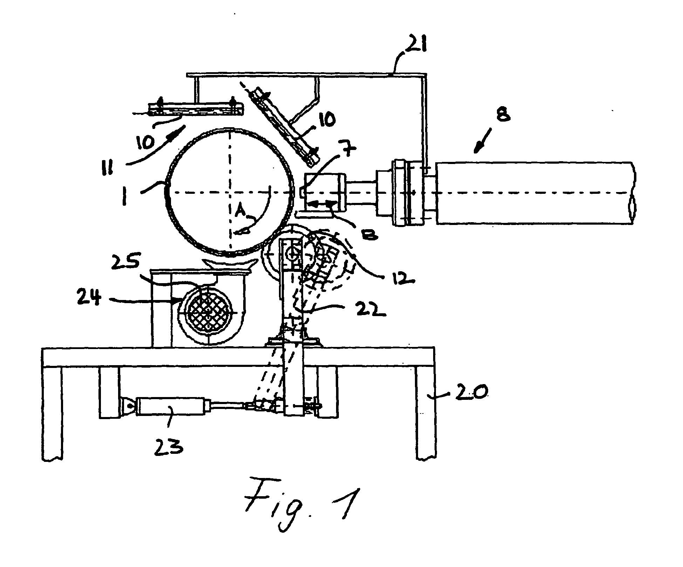

Aus Fig. 1 ist eine Stirnansicht auf den Muffenbereich 1 eines Rohrabschnitts 2 eines extrudierten Kunststoffrohrs ersichtlich, das drehbar in eine nicht näher dargestellte Vorrichtung eingespannt ist. Der Rohrabschnitt 2 ist in bekannter Weise als ein doppelwandiges Rohr mit gewellter äußerer Wandung 3 und glatter Innenwandung 4 extrudiert worden. Der Rohrabschnitt 2 weist den bei der Extrusion angeformten in seinem Durchmesser erweiterten Muffenbereich 1 auf, der durch einen ring- oder konusförmigen Abschnitt 5 mit den verschweißten Rohrwandungen verbunden ist.

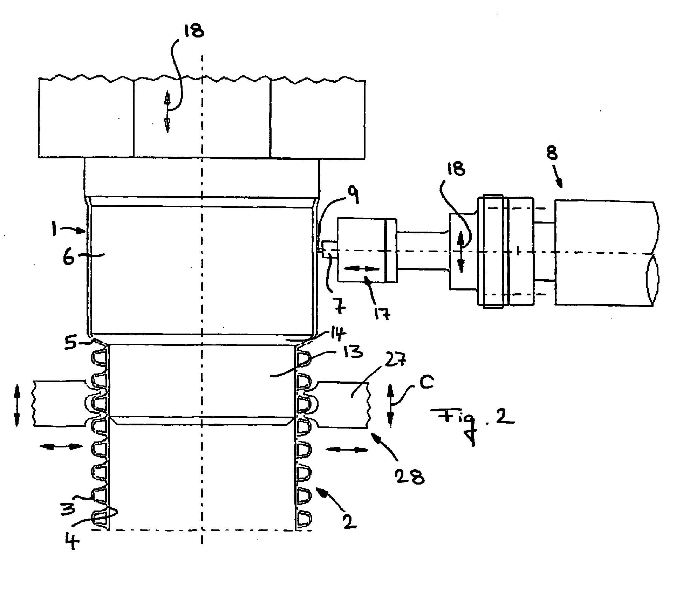

In das Lagergestell 20 ist der Rohrabschnitt 2 drehend eingespannt oder gelagert, wobei mindestens in den Muffenbereich des Rohrabschnitts 2 ein drehbar gelagerter Halte- oder Stützdom 6 eingeschoben ist, dessen äußere Kontur der inneren Kontur des Muffenbereichs 1, des Übergangsbereichs 5 und dem Durchmesser des inneren Rohrs 4 entspricht.
Um beim Einführen und Herausziehen des Stützdorns die auf das Rohr wirkenden Axialkräfte aufnehmen zu können, kann eine Rohrklemmvorrichtung 28 vorgesehen sein. Wie Fig 2 zeigt, kann das Rohr mit zwei oder mehreren vorzugsweise schalen- bzw. segmentförmigen Spannbacken 27 geklemmt werden. Die Spannbacken können radial zum Rohr zugestellt und weggefahren werden. Zusätzlich sind sie in axialer Richtung gemäß dem Pfeil C verfahrbar. Sie können auf einem an dem Lagergestell 20 entsprechend verfahrbar gelagerten Schlitten angeordnet sein. Für Doppelwandrohre mit gewellter Außenwandung können die Spannbacken entsprechend geformte Aufnahmeflächen besitzen (vgl. Fig. 2).

An den Muffenbereich 6 und den Übergangsbereich 5 ist eine Profilspritzdüse 7 anstellbar, der von einem Extruder 8 eine Kunststoffschmelze zugeführt wird, die sodann auf den Muffenbereich 1 und den Übergangsbereich 5 in Form eines Strangs 9 aus plastifiziertem Kunststoff während mindestens einer Drehung A aufextrudiert wird. Die Profilspritzdüse 7 ist in Richtung des Doppelpfeils B hin und her beweglich, um die Kunststoffschicht mit dem optimalen Abstand auf den Muffenbereich aufextrudieren zu können.

Unmittelbar vor der Profilspritzdüse 7 sind die Quarzstrahler 10 eines mit der Profilspritzdüse 7 beweglichen Heizgeräts 11 angeordnet, durch das der Muffenbereich, der mit einer aufextrudierten verstärkenden Schicht zu versehen ist, plastifiziert oder leicht angeschmolzen wird. Das berührungslos wirkende Heizgerät 11 könnte grundsätzlich auch Heißluftdüsen oder ähnliches besitzen, um den Rohrabschnitt aufzuheizen. Bevorzugt ist aber Infrarotstrahlung. Vorzugsweise ist das Heizgerät 11 an dem Profilspritzkopf 7 oder dem Extruder 8 befestigt, so daß Bewegungen der Profilspritzdüse 7 mit einer entsprechenden Bewegung des Heizgeräts 11 einhergehen und stets der Rohrwandungsabschnitt vor der Extruderdüse beheizt wird. Gemäß Figur 1 sind die Quarzstrahler 10 an einem Heizgeräteträger 21 befestigt, der wiederum am Extruder bzw. dessen Spritzkopf befestigt ist.

Hinter der Profilspritzdüse 7 ist eine Profilwalze 12 angeordnet, mit der die aufextrudierte Schicht kalibriert und geglättet wird. Wie Figur 1 zeigt, ist die Profilwalze 12 an dem Lagergestell 20 gelagert und kann über einen Anstellantrieb radial zu dem Rohrabschnitt bzw. dem Stützdom 6 zugestellt werden. In der gezeichneten Ausführung sitzt die Profilwalze 12 auf einem Schwenkhebel 22, der um eine zur Längsrichtung des Rohres parallele Achse an dem Lagergestell 20 gelagert und mittels eines am Lagergestell 20 abgestützten Druckmittelzylinders schwenkbar ist.

Weiterhin ist an dem Lagergestell 20 ein Kühlgerät 24 zur Kühlung des aufextrudierten Kunststoffs radial von außen her vorgesehen. Ein Kühlluftgebläse 25 bläst kühlende Luft auf die Außenmantelfläche des verstärkten Muffenbereichs in vorteilhafter Weise unmittelbar hinter der Profilwalze 12.

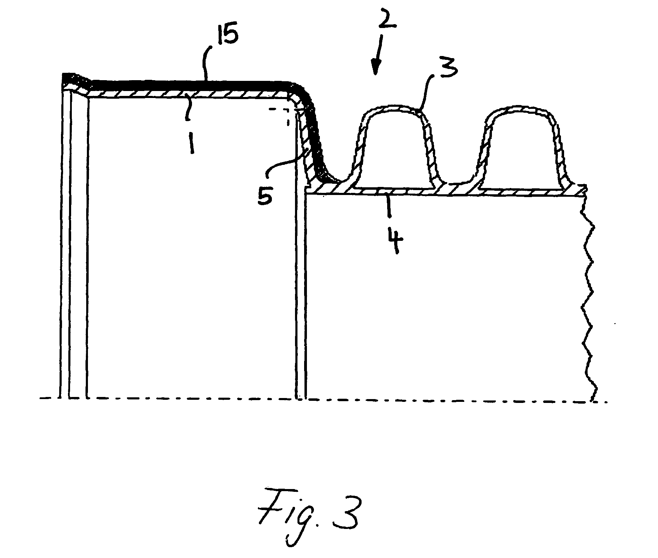

Aus Fig. 3 ist ein Schnitt durch den Muffenbereich eines doppelwandigen Kunststoffrohrs mit gewellter Außenwandung und glatter Innenwandung ersichtlich, wobei auf den Muffenbereich 1 und den Übergangsbereich 5 eine verstärkende Kunststoffschicht 15 in der zuvor beschriebenen Weise aufextrudiert worden ist.

Das erfindungsgemäße Verfahren kann auch in der Weise ausgeführt werden, daß nur der äußere dem Durchmesser des Innenrohrs 4 entsprechende Abschnitt 13 des Haltedorns 6 in den ohne Muffenbereich hergestellten Rohrabschnitt eingeschoben und dann auf den Dorn 6 mit Übergangsabschnitt 14 die Muffe aufextrudiert und dadurch mit dem Rohrabschnitt 2 verbunden wird.

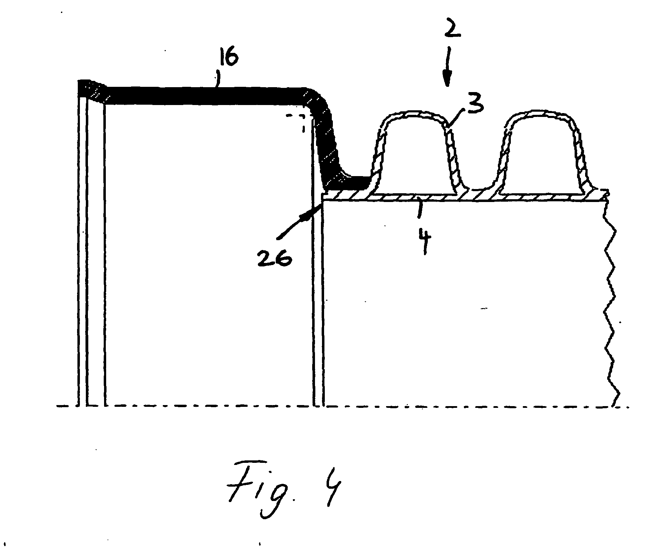

Figur 4 zeigt einen Schnitt durch das Ende eines doppelwandigen Kunststoffrohrs mit gewellter Außenwandung und glatter Innenwandung. Das Rohr endet in einem Bereich, in dem die Außenwandung mit der Innenwandung verschmolzen ist. An diesen Endabschnitt 26 ist die Muffe 16 aufextrudiert, die sich zunächst konisch nach außen hin erweitert und sodann mit einem zylindrischen Abschnitt anschließt. Die Wandstärke der Muffe 16 ist beträchtlich größer als die der Außenwandung bzw. der Innenwandung des Kunststoffrohrs.

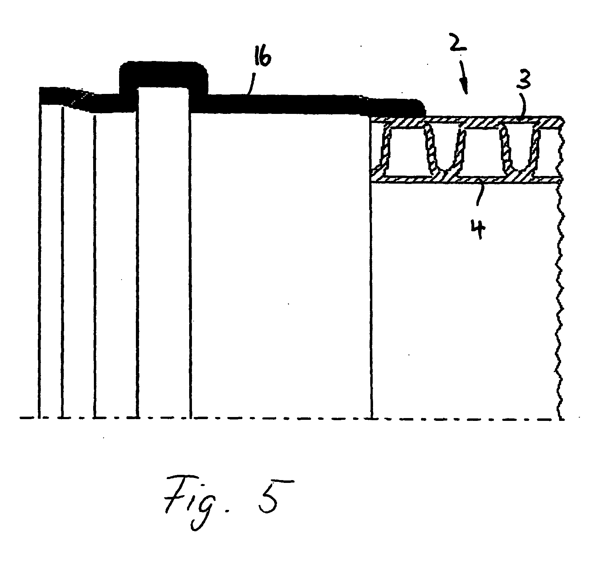

Figur 5 zeigt eine weitere mögliche Muffenform. Das dreiwandige Kunststoffrohr besitzt eine glatte Außenwandung und eine glatte Innenwandung, die durch eine gewellte Wandung miteinander verbunden sind. Auf die Außenseite der Außenwandung ist die Muffe 16 aufextrudiert, die sich stirnseitig über das Ende des zunächst ohne Muffe extrudierten Rohres hinaus erstreckt. In der zuvor beschriebenen Weise wurde die Muffe unmittelbar auf dem aus dem Rohr herausstehenden Dorn komplett im Wickelverfahren aufextrudiert. Auch hier kann die Muffe 16 mit einer Wandstärke beträchtlich größer der der Außenwandung oder der Innenwandung des Rohres gefertigt werden.

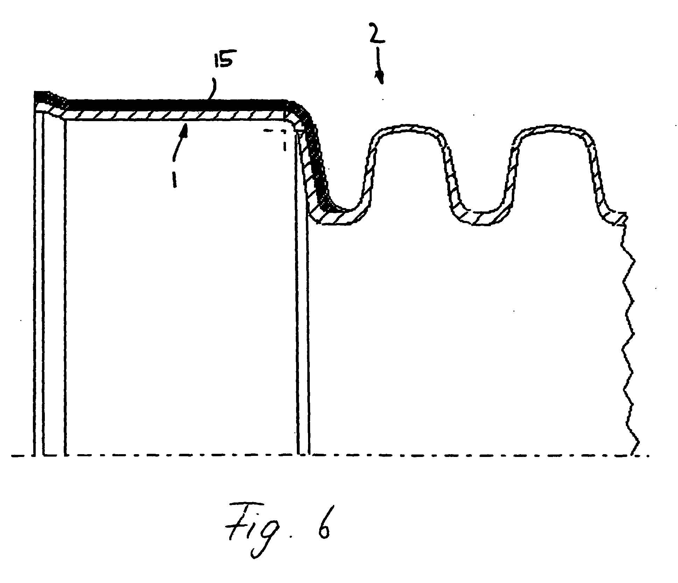

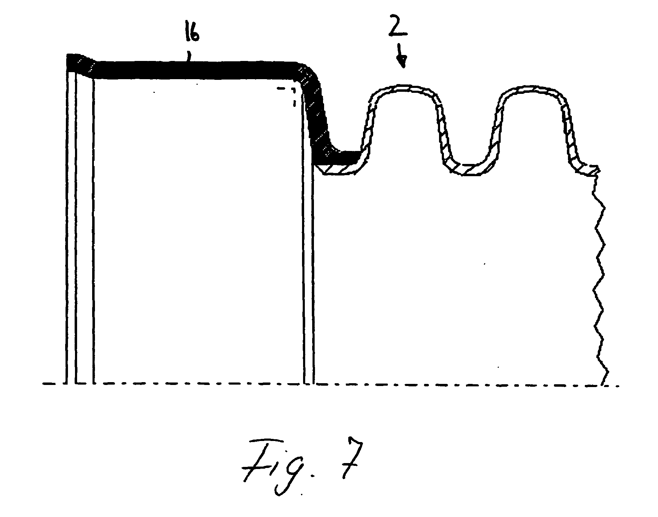

Die Figuren 6 und 7 zeigen verstärkte Muffen an den Enden eines einwandigen Wellrohrs. Gemäß Figur 6 kann eine verstärkende Kunststoffschicht auf die angeformte Muffe des einwandigen Wellrohres aufextrudiert sein. Gemäß Figur 7 kann auch eine Muffe 16 an das Ende des zunächst ohne Muffe hergestellten Rohres anextrudiert sein.

## Patentansprüche

1. Verfahren zum Herstellen einer verstärkten Muffe an einem extrudierten Kunststoffrohr aus thermoplastischem Kunststoff, vorzugsweise an einem Wellrohr,
bei dem das Rohr in vorbestimmten Abschnittlängen mit Muffen, deren Wanddicke im Bereich der Wanddicke des Rohrs liegt, extrudiert wird,
bei dem von dem Rohr Rohrabschnitte mit endseitigen Muffen abgetrennt werden,
bei dem auf den Muffenbereich (1) jedes Rohrabschnitts (2) mindestens eine verstärkende Kunststoffschicht (15) aufextrudiert wird, und
bei dem mindestens in das mit einer Muffe versehene Ende des Rohrabschnitts ein drehbarer Stützdom (6) eingeführt wird,
**dadurch gekennzeichnet,**
**dass** der Stützdom (6) temperiert wird, wobei vorzugsweise der Stützdom vor dem Aufextrudieren der Kunstsoffschicht (15) angewärmt, beim Aufextrudieren der Kunststoffschicht auf einer vorbestimmten Temperatur gehalten, und anschließend gekühlt wird.

2. Verfahren nach Anspruch 1, **dadurch gekennzeichnet, dass** jeder Rohrabschnitt (2) um seine Längsachse drehbar gelagert und in Drehung versetzt wird und unter Drehung des Rohrabschnitts durch einen Düsenkopf (7) eines Extruders die mindestens eine Kunststoffschicht (15) aufextrudiert wird.

3. Verfahren nach einem der Ansprüche 1 oder 2, **dadurch gekennzeichnet, dass** die Kunststoffschicht durch eine Profilspritzdüse (7) in Form eines Strangs (9), dessen Breite oder Dicke einen Bruchteil der Muffenlänge beträgt, **dadurch** aufgebracht wird, dass die Profilspritzdüse (7) und/oder der drehende Rohrabschnitt (2) in Längsrichtung des Rohrabschnitts in der Weise bewegt wird, dass der Strang wendelförmig aufextrudiert wird und die verstärkende Kunststoffschicht mit aneinanderliegenden Windungen bildet.

4. Verfahren nach einem der Ansprüche 1 oder 2, **dadurch gekennzeichnet, dass** die zumindest eine Kunststoffschicht (15) durch eine Breitschlitzdüse, deren Extrusionsschlitz der Länge der Muffe entspricht, aufextrudiert wird.

5. Verfahren nach einem der Ansprüche 1 bis 4, **dadurch gekennzeichnet, dass** die Kunststoffschicht und/oder die Windungen in einer oder mehreren übereinanderliegenden Lagen aufgebracht werden.

6. Verfahren nach einem der Ansprüche 1 bis 5, **dadurch gekennzeichnet, dass** der Muffenbereich (1) vor dem Aufextrudieren der Kunststoffschicht (15) erwärmt wird.

7. Verfahren nach Anspruch 6, **dadurch gekennzeichnet, dass** der Muffenbereich (1) durch Bestrahlung, insbesondere durch Infrarotstrahlung mittels zumindest eines Quarzstrahlers (11) vor der Extrusionsdüse (7) erwärmt wird.

8. Verfahren nach Anspruch 6, **dadurch gekennzeichnet, dass** der Muffenbereich (1) durch Aufblasen von Heißluft vor der Extrusionsdüse (7) erwärmt wird.

9. Verfahren nach einem der Ansprüche 1 bis 8, **dadurch gekennzeichnet, dass** die aufextrudierte Kunststoffschicht durch eine Profilwalze (12) kalibriert und/oder geglättet wird.

10. Verfahren nach Anspruch 1 zum Herstellen einer verstärkten Muffe an einem extrudierten Kunststoffrohr aus thermoplastischem Kunststoff, vorzugsweise an einem Wellrohr, von dem Rohrabschnitte vorbestimmter Länge abgetrennt werden, **dadurch gekennzeichnet, dass** jeder Rohrabschnitt (2) mindestens an einem Ende, an dem die Muffe (16) anzuformen ist, auf den Stützdom (6), dessen äußere Kontur komplementär zu dem inneren Muffenbereich ist, aufgeschoben wird, dass der Rohrabschnitt (2) und der Stützdom (6) um die Längsachse des Rohrabschnitts gedreht werden und dass zumindest eine die Muffe bildende Kunststoffschicht (15) auf den Stützdom (6) im Anschluss an den Rohrabschnitt aufextrudiert und mit dem Ende des Rohrabschnitts verschweißt wird.

11. Verfahren nach Anspruch 1, **dadurch gekennzeichnet, dass** die Muffe in gleicher Weise wie die Muffenverstärkung nach den Ansprüchen 2 bis 9 an den Rohrabschnitt angeformt wird.

12. Vorrichtung zum Herstellen einer verstärkten Muffe an einem extrudierten Kunststoffrohr aus thermoplastischem Kunststoff, insbesondere zur Durchführung des Verfahrens nach einem der vorhergehenden Ansprüche, mit einer Lagervorrichtung (6, 20) zur drehbaren Lagerung des Kunststoffrohrs um seine Längsachse,
einem Extruder (8) mit einer Profilspritzdüse (7), die zur Mantelfläche des Kunststoffrohres hin gerichtet ist,
einem Drehantrieb zur Erzeugung einer Drehung des Kunststoffrohres (2) relativ zu der Profilspritzdüse (7) um die Längsachse des Rohres, wobei die Profilspritzdüse (7) derart angeordnet und/oder bewegbar ist, dass unter Drehung des Kunststoffrohres (2) relativ zu der Profilspritzdüse (7) die Muffe an das Kunststoffrohr extrudierbar ist, und
einem Stützdom (6), wobei eine Temperatursteuerungsvorrichtung zur Temperierung des Stützdorns (6) vorgesehen ist, wobei die Temperatursteuerungsvorrichtung vorzugsweise eine Heizung und eine Kühlvorrichtung umfasst.

13. Vorrichtung nach dem vorhergehenden Anspruch, wobei das Kunststoffrohr zumindest mit seinem einen Ende auf den drehbar gelagerten Stützdom (6) aufschiebbar ist, wobei die Profilspritzdüse (7) der Mantelfläche des Stützdorns (6) gegenüberliegend angeordnet ist derart, dass zur Muffenbildung unter Drehung des Stützdorns und des Kunststoffrohres zumindest eine Kunststoffschicht unmittelbar auf den Stützdom (6) und/oder auf die Außenmantelfläche des auf dem Stützdom sitzenden Abschnitts, insbesondere vorgebildeten Muffenabschnitts, des Kunststoffrohres (2), aufextrudierbar ist.

14. Vorrichtung nach dem vorhergehenden Anspruch, wobei eine Abstandseinstellvorrichtung (17) zur Einstellung des Abstands zwischen der Profilspritzdüse und der äußeren Mantelfläche des Kunststoffrohres und/oder des Stützdorns (6) vorgesehen ist.

15. Vorrichtung nach einem der vorhergehenden Ansprüche, wobei eine Axialbewegungseinrichtung (18) zur Erzeugung einer Axialbewegung zwischen dem Kunststoffrohr (2) und der Profilspritzdüse (7) in Längsrichtung des Kunststoffrohres vorgesehen ist, wobei vorzugsweise eine Steuerungsvorrichtung zur Steuerung der Axialbewegung und der Drehbewegung zwischen dem Rohr und der Profilspritzdüse derart, dass die Profilspritzdüse eine schraubenlinienförmige Bewegung um die Außenmantelfläche des Kunststoffrohres und/oder des Stützdorns ausführt, vorgesehen ist.

16. Vorrichtung nach einem der vorhergehenden Ansprüche, wobei eine Heizvorrichtung (11) zur Aufheizung des Kunststoffrohres in dem Bereich, in dem die Muffe aufextrudiert werden soll, vorgesehen ist, wobei vorzugsweise die Heizvorrichtung (11) in Drehrichtung des Rohres unmittelbar vor der Profilspritzdüse (7) angeordnet ist.

17. Vorrichtung nach einem der vorhergehenden Ansprüche, wobei eine Profilwalze (12) zur Kalibrierung bzw. Glättung der zur Muffenbildung auf extrudierten Kunststoffschicht vorgesehen ist, vorzugsweise in Drehrichtung des Kunststoffrohres unmittelbar nach der Profilspritzdüse (7) angeordnet ist.

18. Vorrichtung nach einem der vorhergehenden Ansprüche, wobei eine Kühlvorrichtung (19), insbesondere ein Kühlgebläse, zur Kühlung der aufextrudierten Kunststoffschicht von außen vorgesehen ist.

19. Vorrichtung nach einem der vorhergehenden Ansprüche, wobei eine Rohrklemmvorrichtung (27) zum Klemmen und axialen Festhalten des Kunststoffrohres bei einem Einschieben und/oder Herausziehen des Stützdorns (6) vorgesehen ist.

## Claims

1. Method for producing a reinforced socket on an extruded plastic tube made of thermoplastic material, preferably a corrugated tube, in which said tube is extruded at predetermined segment lengths with sockets, the wall thickness of which is in the range of the wall thickness of said tube, and in which tube segments with end sockets are separated from said tube, at least one reinforcing layer of plastic (15) is extruded onto the socket region (1) of each tube segment (2), and a rotatable support mandrel (6) is inserted at least into the end of said tube segment provided with a socket,
**characterized in that**
the temperature of said support mandrel (6) is controlled, whereby preferably said support mandrel is heated prior to the extrusion of said layer of plastic (15), its temperature is maintained at a predetermined temperature during the extrusion of said layer of plastic, and then it is cooled.

2. Method in accordance with claim 1, **characterized in that** each tube segment (2) is borne rotatable about its longitudinal axis and is displaced in rotation and while said tube segment rotates said at least one layer of plastic (15) is extruded through a die head (7) of an extruder.

3. Method in accordance with any of claims 1 or 2, **characterized in that** said layer of plastic is applied through a profile extrusion die (7) in the form of a strand (9), the width or thickness of which is a fraction of the length of said socket, applied by said profile extrusion die (7) and/or said rotating tube segment (2) is [/are] caused to move in the longitudinal direction of said tube segment in such a manner that said strand is extruded thereupon in a helical shape and forms said reinforcing layer of plastic with turns that are one top of the other.

4. Method in accordance with any of claims 1 or 2, **characterized in that** said at least one layer of plastic (15) is extruded through a flat sheet die, the extrusion slot of which corresponds to the length of said socket.

5. Method in accordance with any of claims 1 through 4, **characterized in that** said layer of plastic and/or said turns are applied in one or a plurality of layers that lie on top of one another.

6. Method in accordance with any of claims 1 through 5, **characterized in that** said socket region (1) is heated prior to the extrusion of said layer of plastic (15).

7. Method in accordance with claim 6, **characterized in that** said socket region (1) is heated by radiation, in particular by infrared radiation by means of at least one quartz radiator (11) in front of said extrusion die (7).

8. Method in accordance with claim 6, **characterized in that** said socket region (1) is heated by blowing hot air in front of said extrusion die (7).

9. Method in accordance with any of claims 1 through 8, **characterized in that** said extruded layer of plastic is calibrated and/or smoothed by a profile roller (12).

10. Method in accordance with claim 1, for producing a reinforced socket on an extruded plastic tube made of thermoplastic material, preferably a corrugated tube, from which tube segments of predetermined length have been separated,
**characterized in that**
each tube segment (2), at least at one end at which a socket (16) is to be shaped, is placed on a support mandrel (6), the exterior contour of which complements the interior socket region, **in that** said tube segment (2) and said support mandrel (6) are rotated about the longitudinal axis of said tube segment, and **in that** at least one layer of plastic (15) forming said socket is extruded onto said support mandrel (6) adjacent to said tube segment and is welded to said end of said tube segment.

11. Method in accordance with claim 1, **characterized in that** said socket is formed on said tube segment in the same manner as said socket reinforcement in accordance with claims 2 through 9.

12. Apparatus for producing a reinforced socket on an extruded plastic tube made of thermoplastic material, especially for performing the method in accordance with any of the foregoing claims, with a bearing apparatus (6, 20) for rotatably bearing said plastic tube about its longitudinal axis, an extruder (8) with a profile extrusion die (7) that is oriented toward the surface of said plastic tube, and a rotating drive for generating rotation of said plastic tube (2) relative to said profile extrusion die (7) about the longitudinal axis of said tube, whereby said profile extrusion die (7) is arranged and/or movable such that said socket can be extruded onto said plastic tube (2) while said plastic tube is rotating relative to said profile extrusion die (7), and whereby a temperature control apparatus is provided for controlling the temperature of said support mandrel (6), whereby said temperature control apparatus preferably includes a heating apparatus and a cooling apparatus.

13. Apparatus in accordance with the preceding claim, whereby said plastic tube can be placed with its at least one end onto said rotatably borne support mandrel (6), whereby said profile extrusion die (7) is arranged opposing the surface of said support mandrel (6) such that for forming the socket while said support mandrel and said plastic tube rotate at least one layer of plastic can be extruded directly onto said support mandrel (6) and/or onto the exterior surface of said segment that is seated on said support mandrel, in particular of the onto the pre-formed socket segment, of said plastic tube (2).

14. Apparatus in accordance with the preceding claim, whereby a spacing apparatus (17) for adjusting the distance between said profile extrusion die and said exterior surface of said plastic tube and/or said support mandrel (6) is provided.

15. Apparatus in accordance with any of the preceding claims, whereby an axial movement device (18) for generating an axial movement between said plastic tube (2) and said profile extrusion die (7) in the longitudinal direction of said plastic tube is provided, whereby preferably a control apparatus for controlling the axial movement and the rotational movement between said tube and said profile extrusion die is provided such that said profile extrusion die performs a helical line movement about the exterior surface of said plastic tube and/or said support mandrel.

16. Apparatus in accordance with any of the preceding claims, whereby a heating apparatus (11) is provided for heating said plastic tube in the region in which said socket is to be extruded, whereby preferably said heating apparatus (11) is arranged in the direction of rotation of said tube immediately in front of said profile extrusion die (7).

17. Apparatus in accordance with any of the preceding claims, whereby a profile roller (12) is provided for calibrating and/or smoothing said layer of plastic extruded for forming said socket, preferably in the direction of rotation of said plastic tube immediately after said profile extrusion die (7).

18. Apparatus in accordance with any of the preceding claims, whereby a cooling apparatus (19) is provided, in particular a cooling fan, for cooling the extruded layer of plastic from the exterior.

19. Apparatus in accordance with any of the preceding claims, whereby a tube clamping apparatus (27) is provided for clamping and axially fixing said tube when said support mandrel (6) is inserted and/or removed.

## Revendications

1. Procédé de fabrication d'un manchon renforcé sur un tube plastique extrudé en matière thermoplastique, de préférence sur un tube ondulé, dans lequel le tube est extrudé à des longueurs de tronçon prédéterminées avec des manchons dont l'épaisseur de paroi se situe dans le domaine de l'épaisseur de paroi du tube, dans lequel des tronçons de tube avec des manchons d'extrémité sont découpés dans le tube, dans lequel au moins une couche de plastique de renfort (15) est surextrudée sur la partie de manchon (1) de chaque tronçon de tube (2), et dans lequel un mandrin d'appui rotatif (6) est introduit au moins dans l'extrémité du tronçon de tube dotée d'un manchon, **caractérisé en ce que** le mandrin d'appui (6) est tempéré, le mandrin d'appui étant de préférence réchauffé avant la surextrusion de la couche de plastique (15), maintenu à une température prédéterminée pendant la surextrusion de la couche de plastique et ensuite refroidi.

2. Procédé selon la revendication 1, **caractérisé en ce que** chaque tronçon de tube est monté à rotation et mis en rotation autour de son axe longitudinal, et **en ce que** ladite au moins une couche de plastique (15) est surextrudée par une tête porte-filière (7) d'une extrudeuse lors de la rotation du tronçon de tube.

3. Procédé selon l'une des revendications 1 ou 2, **caractérisé en ce que** la couche de plastique est appliquée par une filière d'extrusion profilée (7) sous la forme d'un cordon (9), dont la largeur ou l'épaisseur correspond à une fraction de la longueur du manchon, en déplaçant la filière d'extrusion profilée (7) et/ou le tronçon de tube en rotation (2) dans la direction longitudinale du tronçon de tube, de façon que le cordon soit surextrudé en spirale et forme la couche de plastique de renfort par des spires accolées.

4. Procédé selon l'une des revendications 1 ou 2, **caractérisé en ce que** ladite au moins une couche de plastique (15) est surextrudée à l'aide d'une filière à fente large dont la fente d'extrusion correspond à la longueur du manchon.

5. Procédé selon l'une des revendications 1 à 4, **caractérisé en ce que** la couche de plastique et/ou les spires sont appliquées en une ou plusieurs couches superposées.

6. Procédé selon l'une des revendications 1 à 5, **caractérisé en ce que** la partie de manchon (1) est chauffée avant la surextrusion de la couche de plastique (15).

7. Procédé selon la revendication 6, **caractérisé en ce que** la partie de manchon (1) est chauffée par un rayonnement, en particulier par un rayonnement infrarouge produit par au moins un radiateur à quartz (11) disposé devant la filière d'extrusion (7).

8. Procédé selon la revendication 6, **caractérisé en ce que** la partie de manchon (1) est chauffée par soufflage d'air chaud devant la filière d'extrusion (7).

9. Procédé selon l'une des revendications 1 à 8, **caractérisé en ce que** la couche de plastique surextrudée est calibrée et/ou lissée par un rouleau profilé (12).

10. Procédé selon la revendication 1, pour la fabrication d'un manchon renforcé sur un tube plastique extrudé en matière thermoplastique, de préférence sur un tube ondulé, dans lequel sont découpés des tronçons de tube de longueur prédéterminée, **caractérisé en ce que** chaque tronçon de tube (2) est enfilé, au moins par une extrémité sur laquelle le manchon (16) doit être formé, sur le mandrin d'appui (6) dont le contour extérieur est complémentaire de la partie intérieure du manchon, **en ce que** le tronçon de tube (2) et le mandrin d'appui (6) sont mis en rotation autour de l'axe longitudinal du tronçon de tube, et **en ce qu'**au moins une couche de plastique (15) formant le manchon est surextrudée sur le mandrin d'appui (6) dans le prolongement du tronçon de tube et est soudée sur l'extrémité du tronçon de tube.

11. Procédé selon la revendication 1, **caractérisé en ce que** le manchon est formé sur le tronçon de tube de la même manière que le renfort de manchon selon les revendications 2 à 9.

12. Dispositif de fabrication d'un manchon renforcé sur un tube plastique extrudé en matière thermoplastique, en particulier pour mettre en oeuvre le procédé selon l'une des revendications précédentes, avec un dispositif de support (6, 20) pour supporter à rotation le tube plastique autour de son axe longitudinal, avec une extrudeuse (8) munie d'une filière d'extrusion profilée (7) orientée vers la surface périphérique du tube plastique, avec un dispositif d'entraînement en rotation pour mettre en rotation le tube plastique (2) par rapport à la filière d'extrusion profilée (7) autour de l'axe longitudinal du tube, la filière d'extrusion profilée (7) étant implantée et/ou mobile de manière à pouvoir extruder le manchon sur le tube plastique par rotation du tube plastique (2) par rapport à la filière d'extrusion profilée (7), et avec un mandrin d'appui (6), un dispositif de régulation thermique étant prévu pour tempérer le mandrin d'appui (6), le dispositif de régulation thermique comprenant de préférence un chauffage et un dispositif de refroidissement.

13. Dispositif selon la revendication précédente, dans lequel le tube plastique peut être enfilé au moins par sa première extrémité sur le mandrin d'appui monté à rotation (6), la filière d'extrusion profilée (7) étant disposée par rapport à la surface périphérique du mandrin d'appui (6) de manière qu'il soit possible, pour former le manchon par rotation du mandrin d'appui et du tube plastique, de surextruder au moins une couche de plastique directement sur le mandrin d'appui (6) et/ou sur la surface périphérique extérieure de la portion du tube plastique (2) reposant sur le mandrin d'appui, en particulier de la portion de manchon préformée de celui-ci.

14. Dispositif selon la revendication précédente, dans lequel est prévu un dispositif de réglage d'écartement (17) pour régler la distance entre la filière d'extrusion profilée et la surface périphérique extérieure du tube plastique et/ou du mandrin d'appui (6).

15. Dispositif selon l'une des revendications précédentes, dans lequel est prévu un dispositif de déplacement axial (18) pour produire un déplacement axial entre le tube plastique (2) et la filière d'extrusion profilée (7) dans la direction longitudinale du tube plastique, un dispositif de commande étant de préférence prévu pour commander le mouvement axial et le mouvement de rotation entre le tube et la filière d'extrusion profilée afin que la filière d'extrusion profilée exécute un mouvement hélicoïdal autour de la surface périphérique extérieure du tube plastique et/ou du mandrin d'appui.

16. Dispositif selon l'une des revendications précédentes, dans lequel est prévu un dispositif de chauffage (11) pour réchauffer le tube plastique dans la région où le manchon doit être surextrudé, le dispositif de chauffage (11) étant de préférence disposé immédiatement avant la filière d'extrusion profilée (7) par rapport au sens de rotation du tube.

17. Dispositif selon l'une des revendications précédentes, dans lequel est prévu un rouleau profilé (12) pour calibrer, respectivement lisser la couche de plastique surextrudée pour former le manchon, ledit rouleau profilé (12) étant disposé de préférence immédiatement après la filière d'extrusion profilée (7) par rapport au sens de rotation du tube plastique.

18. Dispositif selon l'une des revendications précédentes, dans lequel est prévu un dispositif de refroidissement (19), en particulier une soufflante de refroidissement, pour refroidir de l'extérieur la couche de plastique surextrudée.

19. Dispositif selon l'une des revendications précédentes, dans lequel est prévu un dispositif de pincement de tube (27) pour pincer et maintenir axialement le tube plastique lors de l'insertion et/ou du retrait du mandrin d'appui (6) .
